# EUROPEAN PATENT SPECIFICATION

(11) **EP 2 312 090 B1**
(45) Date of publication and mention of the grant of the patent: **14.08.2013**
(21) Application number: 10009532.2
(22) Date of filing: 14.09.2010
(51) Int. Cl.: E04H 12/18, E04H 12/00, F03D 9/00, F03D 9/02, F03D 11/04, F21S 8/08, F21S 9/04, F21S 9/02, F21S 9/03

(54) **Energy collector mast**
Energiekollektormast
Mât de collecteur d'énergie

(30) Priority: 07.10.2009 GB 0917582
(43) Date of publication of application: 20.04.2011
(73) Proprietor: Pudsey Diamond Engineering Limited, Andover Hampshire SP10 3TJ (GB)
(72) Inventor: Diamond, Peter James Andrew, Andover Hampshire SP10 3TJ (GB)
(74) Representative: Brooks, Nigel Samuel

(56) References cited:
- EP-A2- 0 205 955
- WO-A1-2007/117064
- WO-A2-2009/013607
- FR-A1- 2 568 948

## Description

The present invention relates to an energy collector mast.

Street lights have been held up on lamp standards since before the days of gas lamps.

It is known to support up masts energy collection devices such as solar panels and wind turbines. The purpose of this is known to include powering lights.

In particular it is known to install a wind turbine at the top of a column having a light and for the column to be hinged to a base for lowering when servicing of the turbine and the light is required. Lowering for service allows installation in situations where a wheeled hoist cannot be used. However, controlling lowering by means of reaction springs and/or pulley systems is inconvenient and expensive.

It is also known to pivot flag poles above ground level and provide a counterbalance weight to facilitate controlled lowering and re-erection.

Hereinbelow, the term "mast" is used to include the terms "standard", "column" and "pole" as used above.

FR 2568948 Dodeman teaches an articulated bearing structure for horizontal-axis wind machines. This device uses a spring to hold the mast in an upright position, which also enables the mast to withstand wind-shock. The spring has to be released to lower the last for maintenance.

WO 2009/013607 in the name of Vergnet Hydro SAS teaches a mast for a solar panel. The mast can be pivoted about it base however, as there is no counterbalance weight this is inconvenient and expensive.

WO 2007/117064 in the name of World Top Technology Co., Ltd teaches a mast for a solar street light. This mast can also be pivoted about its base, but again as there is no counterbalance weight this is inconvenient and expensive.

EP0205955 in the name of Rudolf Thomas Stahlbau GmbH & Co. KG teaches a mast that is tiltable under the action of a hydraulic piston/cylinder unit. This arrangement can be operated by opening of the base of the mast to activate the hydraulic unit. This is a very complicated and therefore expensive arrangement, reliant on springs and a hydraulic system.

The object of the present invention is to provide an improved energy collector mast.

According to the invention there is provided an energy collector mast comprising:
- a base for the mast, the base having:
   - means for ground securement,
   - an upstand from the ground securement means and
   - a pivot at the top of the upstand, the pivot being spaced above the ground when the upstand is stood up and secured to the ground in use;
- a mast as such, the mast being pivotally connectable to the base, the mast as such having:
   - a complementary pivot, complementary to the base pivot, for pivotal connection of the mast as such to the base,
   - a major mast part upstanding in use from the complementary pivot,
   - a minor mast part depending in use from the complementary pivot and
   - a battery support secured to the minor mast part, in such position that the gravitational moment of a supported battery at least partially counterbalances the gravitational moment of the major mast part; and
- means for fixing the minor part of the mast to the base for holding the mast as such upright.

As used herein, "gravitational moment" means the product of the weight of the part in question and the distance normal to the gravity, i.e. the horizontal distance, from the centre of gravity of the part to its pivot.

Normally the gravitational moment of the battery will be more than adequate to counterbalance that part of the gravitational moment of the major part of the mast as such which is not counterbalanced by the gravitational moment of the minor part of the mast. In other words when battery is not supported, the mast as such will lay down; and when the battery is supported, the mast as such will stand up.

Nevertheless, the gravitational moment of the battery may not be sufficient to stand up the mast together with its payload. In this case, means for adding counterbalance weight will be provided.

In practice the mast will have a payload at or close to its upper end. The payload typically includes either or both of a solar collector panel and a wind turbine. Further the payload may include lighting means, e.g. a lamp, light or lantern. Alternative payloads are data collectors, such as cameras and speed detectors, and road signs. The gravitational moment of the payload is appreciable even if its weight is small compared with the weight of the mast as such, the payload being at or close to the top end of the mast.

Accordingly it is anticipated that the battery at its support position will normally be sufficient to counterbalance the mast as such, but when the payload is added to the mast, some additional counterbalance weight may be required.

It is envisaged that the battery may be provided as a single unit or as two or more units.

To help understanding of the invention, a specific embodiment thereof will now be described by way of example and with reference to the accompanying drawings, in which:

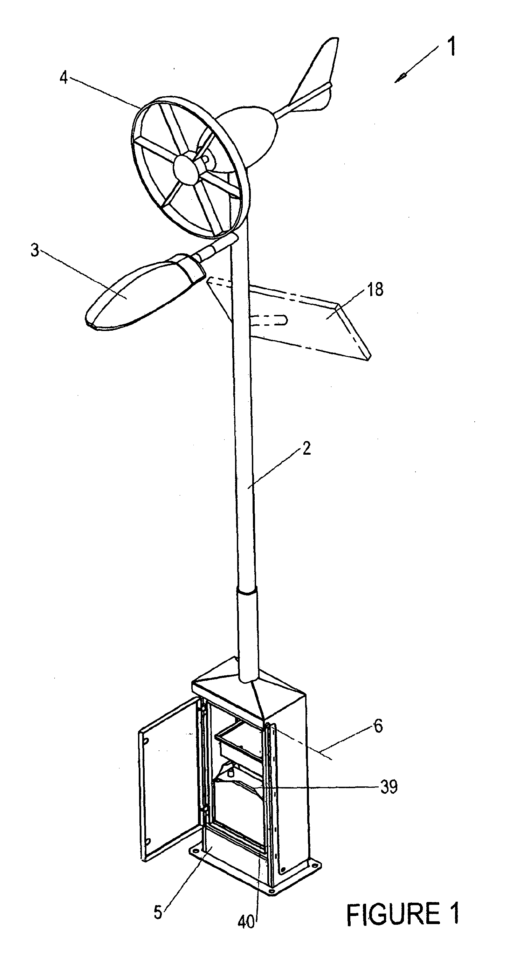

Figure 1 is a perspective view of an energy collector mast of the invention, with the mast erect;

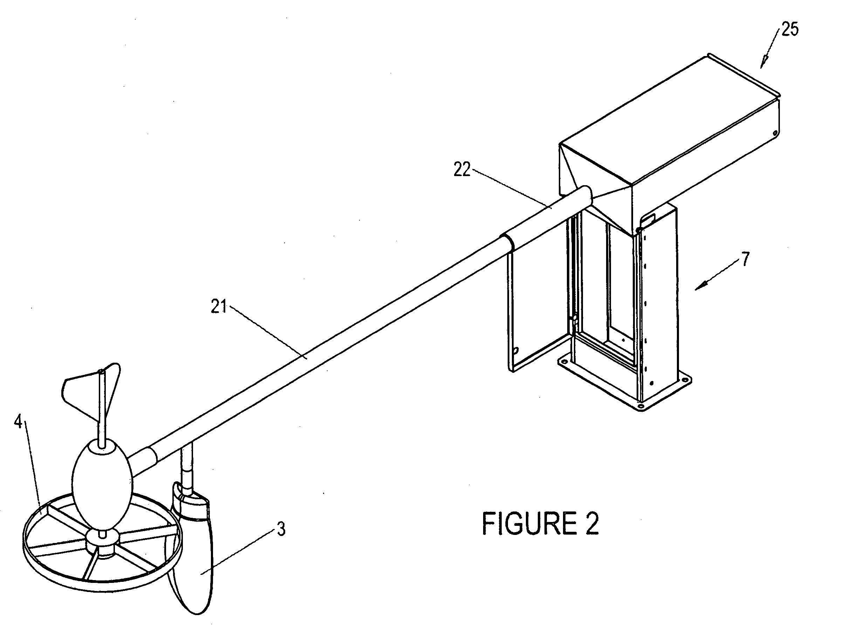

Figure 2 is a similar view of the mast pivoted down;

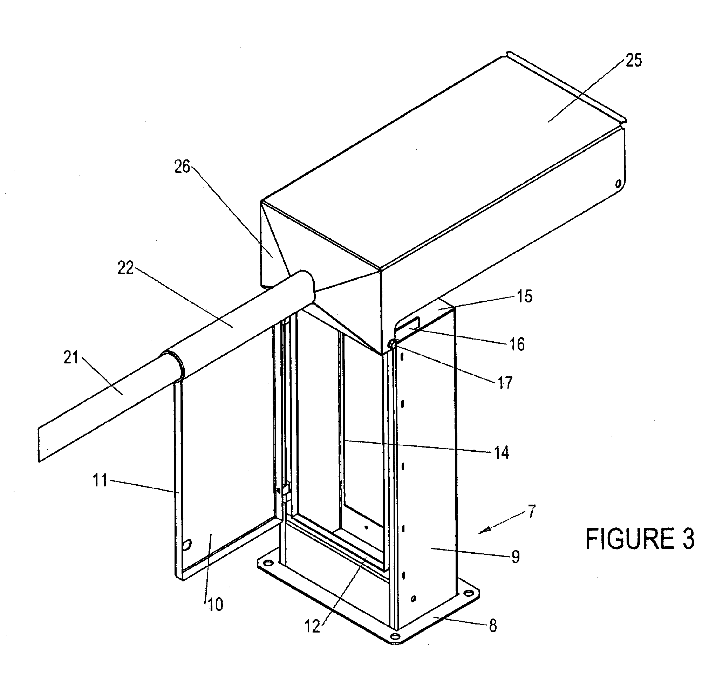

Figure 3 is view from the same angle and on a larger scale of the base of the mast;

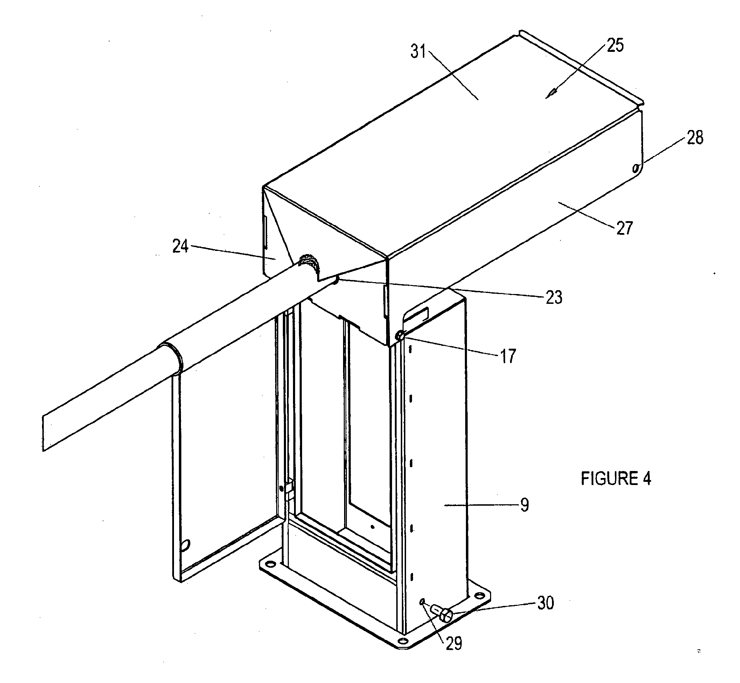

Figure 4 is a detail view of welding of the mast foot, with a sloping lid of a lower pivoted portion removed;

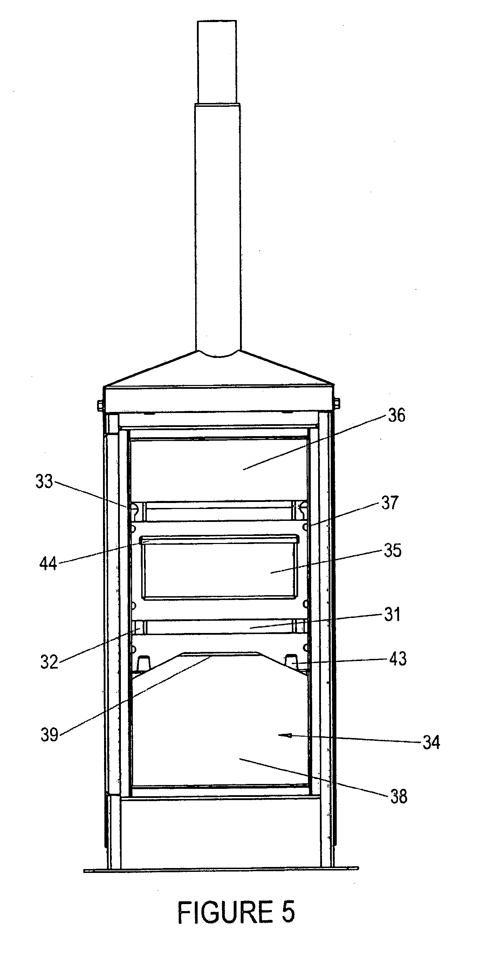

Figure 5 is a front view of the base, with the mast erect and on a similar scale to Figure 3; and

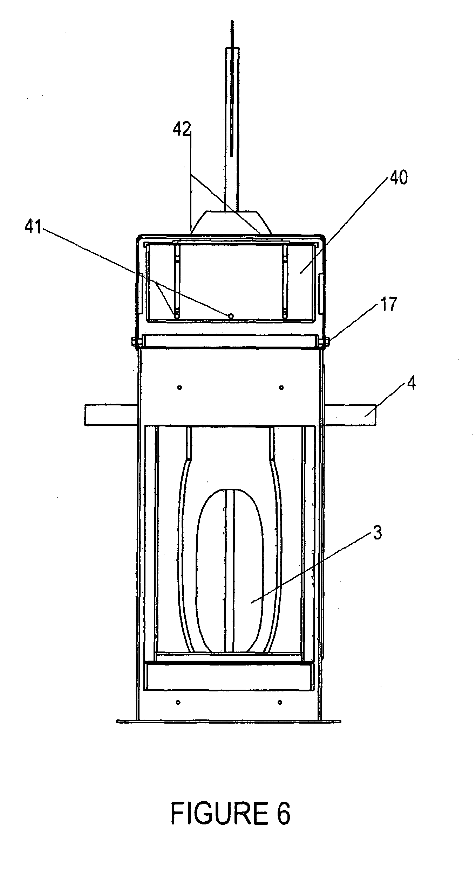

Figure 6 is a rear view of the base with the mast pivoted down.

Referring to the drawings, an energy collector mast indicated generally as 1 carries on a mast 2 as such a payload in the form of:
- a lamp 3,
- a wind turbine 4 and
- an optional photo-voltaic panel 18.

The mast as such is pivotally connected to a base 5 about a pivot axis 6. The base comprises an upright box 7 having a base flange 8, via which the mast can be secured in an installed position. Sides 9 of the box are closed. The front has a door 10, which can be locked closed. The door has in-turned flanges 11, which are received in channels 12 surrounding the door aperture. The back of the box is open with small lips 14 turned in from the sides. The lips are narrower than the channels 12. The top of the box is closed by a plate 15, which carries lugs 16 that provide threaded sockets for pivot bolts 17. The base, and indeed the mast as such, is typically of galvanised, welded steel construction.

The mast as such has an upper tubular portion 21 and a lower socket portion 22, which receives and secures the upper portion. Together these make up the major part of the mast as such. The bottom end of the socket portion is welded at 23 to a cross plate 24, itself welded to the top of channel piece 25. This latter constitutes a minor part of the mast as such. To reinforce the weld 23, a sloping lid 26 is welded to the cross plate and the channel and to the socket 22 above the weld 23. The channel is sized for its sides 27 to fit outside the sides 9 of the base, with the pivot bolts passing through sides 27 at their top front corners. Provision is made at the bottom front corners of the sides and in the sides for securing the sides together when the mast is erect. Typically the provision is an aperture 28 in each side 27 and a captive nut (not shown) inside a corresponding aperture 29 in the respective side 9, with bolts 30 holding the mast upright. The channel has a back 31 closing the back of the box of the base when the mast is erect.

The above details of the embodiment are essentially conventional. Counterbalancing the mast in accordance with the invention will now be described.

Inside the back 31 are secured to strips 32 having keyhole slots 33. A battery compartment 34, an auxiliary box 35 and a wiring board 36 are attached to the strips, i.e. to the back 31, by headed fasteners 37 engaging in the slots, whereby the position of the compartments can be adjusted with respect to the pivot axis 6. The battery compartment has front panel 38, with a turned-in lip 39, whereby the battery cannot be removed up out of the compartment when the mast is erect. Rather, the bottom panel 40 of the compartment is removable. It is normally secured by bolts 41 and a tongue 42 in a slot in the back of the compartment (neither shown). The battery is fitted when the mast is laid down. This arranges the back with the strips facing down. The compartment is engaged at its selected position, the bottom panel released and a battery 43 is introduced. With the bottom panel replaced, the battery is secure and its weight acts at a gravitational moment about the pivot axis 6, counterbalancing at least part of the gravitational moment of the mast as such and the payload. The auxiliary box 35 has a lid 44 and can contain additional counterbalance weight - such as ballast or a brick - as required where the mast is tall or the payload is heavy.

With the mast and payload nearly counterbalanced by the battery and additional weight, the mast can be erected by manual pressure on the back 31 remote from the pivot. Once erect, the mast is secured by the bolts 30.

It should be noted that the compartments, or at least the battery compartment, is narrower than the gap between the lips 14, but wider than the gap between the channels 12. The result is that there is clearance for the compartments to fit between the sides 9 of the base, yet battery compartment cannot be removed through the door aperture. Nor can the battery be removed, as explained above. Not only is this an anti-theft measure, it is also a safety measure in ensuring that the counterbalance effect of the battery is available when the mast is next pivoted down.

The invention is not restricted to the details of the above-described embodiment. For instance, as required, two batteries may be fitted in place of a single battery and other counterbalance weight.

It is envisaged that the invention will have particular advantage at installations where mains electricity and/or service equipment such as a lift for an individual to reach the lamp for bulb replacement cannot be made economically available. Further the component parts of the energy collector mast can be delivered to site, assembled and erected without the need of a lift.

## Claims

1. An energy collector mast comprising:
• a base (5) for the mast (1), the base having:
• means (8) for ground securement,
• an upstand (7) from the ground securement means and
• a pivot (17) at the top of the upstand, the pivot being spaced above the ground when the upstand is stood up and secured to the ground in use;
• a mast (2) as such, the mast being pivotally connectable to the base (5), the mast as such having:
• a complementary pivot (6), complementary to the base pivot, for pivotal connection of the mast as such to the base,
• a major mast part (21) upstanding in use from the complementary pivot, and
• a minor mast part (22) depending in use from the complementary pivot; and
• means (28, 29, 30) for fixing the minor part of the mast to the base for holding the mast as such upright
**characterised in that** the mast as such further comprises
• a battery support (34) secured to the minor mast part, in such position that the gravitational moment of a supported battery at least partially counterbalances the gravitational moment of the major mast part

2. An energy collector mast as claimed in claim 1, **characterised in that** the gravitational moment of the at least one battery is more than adequate to counterbalance that part of the gravitational moment of the major part of the mast as such which is not counterbalanced by the gravitational moment of the minor part of the mast.

3. An energy collector mast as claimed in claim 1, **characterised in that** the mast further includes means (35) for adding further counterbalance weight.

4. An energy collector mast as claimed in any preceding claim, **characterised in that** the mast includes a payload (3, 4, 18) at or close to its upper end.

5. An energy collector mast as claimed in claim 4, **characterised in that** the payload includes either or both of a solar collector panel (18) and a wind turbine (4).

6. An energy collector mast as claimed in claim 4 or claim 5, **characterised in that** the payload includes a lamp (3), light or lantern.

7. An energy collector mast as claimed in claim 4, claim 5, or claim 6, **characterised in that** the payload includes data collectors, such as cameras and speed detectors, or road signs.

8. An energy collector mast as claimed in any preceding claim, **characterised in that** the battery is provided as a single unit (43) or as two or more units.

9. An energy collector mast as claimed in any preceding claim, **characterised in that** the mast includes a flange (8) for securement to the ground and an upright box (7).

10. An energy collector mast as claimed in claim 9; **characterised in that** the front of the box has a door which can be locked (10), and the back of the box is open.

11. An energy collector mast as claimed in any preceding claim, **characterised in that** the mast is of galvanised, welded steel construction.

## Patentansprüche

1. Energiekollektormast mit:
• einem Unterteil (5) für den Mast (1), wobei das Unterteil aufweist:
• Mittel (8) zur Verankerung im/am Boden,
• ein von dem Verankerungsmittel aufstehendes Ständerteil (7), und
• ein Gelenkteil (17) oben am Ständerteil, wobei das Gelenkteil sich im Abstand oberhalb des Bodens befindet, wenn das Ständerteil aufgestellt und am/im Boden im Gebrauchszustand verankert ist;
• einer eigentlichen Maststange (2), wobei die Maststange am Unterteil (5) schwenkbar anschließbar ist und die eigentliche Maststange aufweist:
• ein ergänzendes Gelenkelement (6) komplementär zu dem Unterteilgelenk, für den Schwenkanschluss der Maststange am Unterteil,
• einen Hauptmastabschnitt (21), der sich im Gebrauchszustand oberhalb des ergänzenden Gelenkelements befindet, und
• einen Nebenmastabschnitt (22), der sich im Gebrauchszustand unterhalb des ergänzenden Gelenkelements befindet; und
• Mitteln (28, 29,30) zum Arretieren des Nebenmastabschnitts an dem Unterteil, um die Maststange in einer aufrechten Position zu halten,
**dadurch gekennzeichnet, dass** die eigentliche Maststange ferner aufweist
• eine Batteriehalterung (34), die an dem Nebenmastabschnitt in einer solchen Position angeordnet ist, dass das Schwerkraftmoment einer gehalterten Batterie das Schwerkraftmoment des Hauptmastabschnitts wenigstens zum Teil kompensiert.

2. Energiekollektormast nach Anspruch 1, **dadurch gekennzeichnet, dass** das Schwerkraftmoment der wenigstens einen Batterie mehr als ausreichend ist, um den Teil des Schwerkraftmoments des Hauptmastabschnitts der Maststange auszugleichen, der nicht von dem Schwerkraftmoment des Nebenmastabschnitts kompensiert wird.

3. Energiekollektormast nach Anspruch 1, **dadurch gekennzeichnet, dass** der Mast ferner Mittel (35) zum Hinzufügen von weiterem Gegengewicht aufweist.

4. Energiekollektormast nach einem der vorstehenden Ansprüche, **dadurch gekennzeichnet, dass** der Mast am oder in der Nähe seines oberen Endes eine Nutzlast (3, 4,18) trägt.

5. Energiekollektormast nach Anspruch 4, **dadurch gekennzeichnet, dass** die Nutzlast einen Solarkollektor (18) und/oder eine Windturbine (4) umfasst.

6. Energiekollektormast nach Anspruch 4 oder Anspruch 5, **dadurch gekennzeichnet, dass** die Nutzlast eine Lampe (3), Leuchte oder Laterne umfasst.

7. Energiekollektormast nach Anspruch 4, Anspruch oder Anspruch 6, **dadurch gekennzeichnet, dass** die Nutzlast Datenerfassungsmittel wie beispielsweise Kameras und Geschwindigkeitsdetektoren, oder Verkehrszeichen umfasst.

8. Energiekollektormast nach einem der vorstehenden Ansprüche, **dadurch gekennzeichnet, dass** die Batterie als eine Einzeleinheit (43) oder in Form von zwei oder mehr Einheiten vorgesehen ist.

9. Energiekollektormast nach einem der vorstehenden Ansprüche, **dadurch gekennzeichnet, dass** der Mast eine Flanschplatte (8) zur Befestigung am Untergrund und ein aufragendes Gehäuse (7) aufweist.

10. Energiekollektormast nach Anspruch 9, **dadurch gekennzeichnet, dass** die Vorderseite des Gehäuses mit einer verschließbaren Tür (10) versehen ist und dass die Rückseite des Gehäuses offen ist.

11. Energiekollektormast nach einem der vorstehenden Ansprüche, **dadurch gekennzeichnet, dass** der Mast aus einer galvanisierten, geschweißten Stahlkonstruktion besteht.

## Revendications

1. Un mât collecteur d'énergie comprenant .
• une base (5) pour le mât (1), la base possédant :
• des moyens (8) de fixation au sol,
• un réhausseur (7) par rapport aux moyens de fixation au sol et
• un pivot (17) au sommet du réhausseur, le pivot étant à distance au-dessus du sol lorsque le réhausseur est redressé et fixé au sol en utilisation ;
• un mât (2) proprement dit, le mât pouvant être relié à pivotement à la base (5), le mât proprement dit possédant :
• un pivot complémentaire (6), complémentaire du pivot de la base, pour une liaison à pivotement du mât proprement dit à la base,
• une partie majeure de mât (21) s'élevant en utilisation à partir du pivot complémentaire, et
• une partie mineure de mât prolongeant en utilisation le pivot complémentaire ; et
• des moyens (28, 29, 30) pour fixer la partie mineure de mât à la base pour maintenir redressé le mât proprement dit,
**caractérisé en ce que** le mât proprement dit comprend en outre :
• un support de batterie (34) fixé à la partie mineure de mât, dans une position telle que le moment gravitationnel d'une batterie supportée contrebalance au moins partiellement le moment gravitationnel de la partie majeure de mât.

2. Un mât collecteur d'énergie selon la revendication 1, **caractérisé en ce que** le moment gravitationnel de la au moins une batterie est plus qu'approprié à contrebalancer la partie du moment gravitationnel de la partie majeure de mât proprement dit qui n'est pas contrebalancée par le moment gravitationnel de la partie mineure de mât.

3. Un mât collecteur d'énergie selon la revendication 1, **caractérisé en ce que** le mât comprend en outre des moyens (35) pour ajouter un poids de contrebalancement supplémentaire.

4. Un mât collecteur d'énergie selon l'une des revendications précédentes, **caractérisé en ce que** le mât comprend une charge utile (3, 4, 18) à son extrémité supérieure ou à proximité.

5. Un mât collecteur d'énergie selon la revendication 4, **caractérisé en ce que** la charge utile comprend l'un ou l'autre, ou les deux, d'un panneau collecteur solaire (18) et d'une turbine éolienne (4).

6. Un mât collecteur d'énergie selon la revendication 4 ou la revendication 5, **caractérisé en ce que** la charge utile comprend une lampe (3), un éclairage ou une lanterne.

7. Un mât collecteur d'énergie selon la revendication 4, la revendication 5 ou la revendication 6, **caractérisé en ce que** la charge utile comprend des collecteurs de données, tels que des caméras et des détecteurs de vitesse, ou des panneaux routiers.

8. Un mât collecteur d'énergie selon l'une des revendications précédentes, **caractérisé en ce que** la batterie se présente sous forme d'un bloc unique (43) ou de deux blocs ou plus.

9. Un mât collecteur d'énergie selon l'une des revendications précédentes, **caractérisé en ce que** le mât comporte un rebord (8) pour la fixation au sol, et un carter redressé (7).

10. Un mât collecteur d'énergie selon la revendication 9, **caractérisé en ce que** l'avant du carter possède une porte qui peut être verrouillée (10), et l'arrière du carter est ouvert.

11. Un mât collecteur d'énergie selon l'une des revendications précédentes, **caractérisé en ce que** le mât est en une structure d'acier soudé galvanisé.
